# EUROPEAN PATENT APPLICATION

(11) **EP 2 423 174 A1**
(43) Date of publication of application: **29.02.2012**
(21) Application number: 10173841.7
(22) Date of filing: 24.08.2010
(51) Int. Cl.: C04B 35/571, C04B 35/589

(54) **Reinforced ceramic micromechanical component**

(71) Applicant: ETA SA Manufacture Horlogère Suisse, 2540 Grenchen (CH)
(72) Inventor: Vadym, Bakumov, 8050 Zürich (CH); Gurdial, Blugan, 8600 Dübendorf (CH); Kuebler, Jakob, 8535 Herdern (CH)
(74) Representative: Couillard, Yann Luc Raymond

(57) **Abstract**

The invention relates to a ceramic polymer precursor containing inclusions of at least one carbon-rich chemical substance in order to produce a mechanically reinforced ceramic.

## Description

### Field of the Invention

The invention relates to the production of a ceramic polymer precursor as well as a process for the production of a micromechanical component using this precursor.

### Background of the Invention

Attempts have already been made to produce ceramic material for micromechanical components. While it appears possible to produce components, these are not satisfactory in terms of their mechanical resistance and their tribological properties.

### Summary of the Invention

The aim of the present invention is to fully or partially remedy the disadvantages indicated above by proposing a novel type of precursors suitable for use in forming reinforced ceramic micromechanical components.

On this basis, the invention relates to a ceramic polymer precursor containing 2-20 wt.%, more preferably 4-9%, inclusions of at least one silicon-containing carbon-rich chemical substance in order to produce a tribologically improved ceramic. The peculiarity and advantage of the present invention is the fact that all components are present in low-viscous liquid or soluble state, which allows the fabrication of various complex structures by numerous and versatile techniques including microfabrication. The homogeneous distribution of carbon and silicon carbide components enables smooth defect-free surface and high strength.

In accordance with other advantageous features of the invention:
- Precursor contains at least one polysilazane sequence and, preferably, at least one polycarbosilane sequence;
- said at least one carbon-rich chemical substance contains ΞSi-H, ΞSi-CH=CH₂, ΞSi-CH₂-CH=CH₂, ΞSi-Phenyl or ΞSi-Aromatic (except ΞSi-phenyl aromatic) moiety;
- said at least one carbon-rich chemical substance contains triphenyl vinyl silane, triphenyl silane, phenyl silane, diphenyl silane, allyl-triphenyl silane, diallyl-triphenyl silane, p-tolylsilane, 1,3,5,7-tetravinyl-1,3,5,7-tetramethyl-cyclotetrasilazane, 1,3,5-trivinyl-1,3,5-tetramethyl-cyclotrisilazane, 1,3-divinyl-1,3-diphenyl-1,3-dimethyl-disilazane, .tetravinyl silane.

The invention also relates to a process for the production of a ceramic polymer precursor in accordance with any of the preceding embodiments, characterised in that it includes the following steps:
a) providing a ceramic polymer precursor;
b) forming inclusions of at least one carbon-rich chemical substance in order to chemically improve the precursor.

In accordance with other advantageous features of the invention:
- step b) is facilitated by adding polycarbosilane in amount 5-95% to increase the concentration of Si-H reactive groups necessary for said inclusion, increase silicon carbide content and improve mechanical properties of the green compact;
- said amount of polycarbosilane is comprised between 30 and 70%.

Finally, the invention relates to a process for the production of a micromechanical component made of reinforced ceramic material, characterised in that it includes the following steps:
- producing an improved ceramic polymer precursor according to hereinbefore embodiments;
- filling a mould with the shape corresponding to the future micromechanical component using said improved ceramic polymer precursor;
- conducting, at least partially, a reticulation of said precursor in order to form a green compact;
- de-moulding the green compact;
- conducting a pyrolysis operation to obtain the reinforced ceramic micromechanical component, pyrolysis being conducted in an inert gas atmosphere and/or between 1100 °C and 1450 °C.

Advantageously, the decreased shrinkage during reticulation allows fabrication of crack-free complex constrained structures. Moreover, the green compact fabricated by reticulation of the said precursors inherits stiffness (strength) from the reticulated polysilazane component and (inherits) elasticity from the reticulated polycarbosilane component. Said combination of qualities results in green compact, which stains higher deformation and might be easier demoulded and further processing. The invention makes it possible to fabricate thicker and larger crack-free structures as compared to the state-of-the-art single-source (e.g. polysilazane) precursors.

### Detailed Description of Preferred Embodiments

The objective of the invention is to provide a new type of ceramic polymer precursors intended for the production of a micromechanical component that can withstand elevated mechanical stresses. In particular, studies are directed towards application to a moving part for a timepiece, for which is sought a mechanical resistance of more than 500 MPa, a coefficient of internal friction of less than 0.2 and a surface roughness, wherein the peak-to-valley distance (Ra) is less than 25 nm.

Moreover, with respect to the process for producing the micromechanical component that preferably uses a mould, it is also necessary that the viscosity of the precursor must be comprised between 2 and 200 mPa.s and, preferably, around 50 mPa.s, in order to facilitate filling the mould, i.e. to prevent the precursor from trapping air in the corners of the mould.

During the study it was found that it is possible to meet all the above conditions by chemically modifying a precursor by incorporating carbon-rich substances. The base precursor preferably contains at least one polysilazane sequence such as e.g. the product Ceraset® polysilazane 20 from Kion®. However, polyureasilazane products can be used as an alternative such as the Ceraset® polyureasilazane from Kion®.

In fact the ceramic obtained by pyrolysis of this improved precursor contains amorphous carbon and/or graphenes that decrease quite considerably its coefficient of friction in particular.

It has been found that there is a large variety of carbon-rich substances that can be incorporated into the base precursor, as soon as they incorporate linker groups, reacting chemically with hydrosilyl, vinyl or allyl groups of the base polysilyzane precursor. The most suitable linker moieties of carbon-rich substances are hydrosilyl and vinyl groups attached to the silicon atom. The carbon-bearing moieties of the said carbon-rich substances are preferably aryl, phenyl or naphthyl groups. Hence, inclusions are possible with the following commercially available substances, among others:

| | |
|---|---|
| triphenyl vinyl silane: | diphenyl silane: |
| 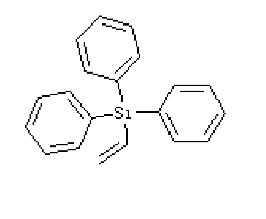 | 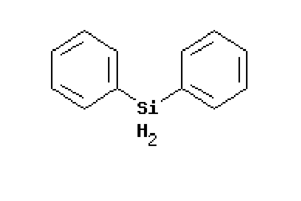 |
| triphenyl silane: | allyl-triphenyl silane: |
| 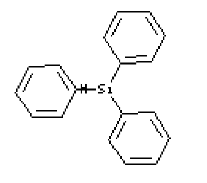 | 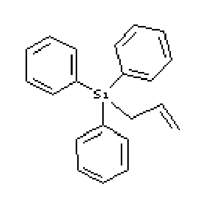 |
| phenyl silane: | diallyl-diphenyl silane: |
| 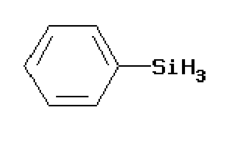 | 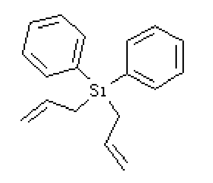 |
| 1,3,5,7-tetravinyl-1,3,5,7-tetramethyl-cyclotetrasilazane: | |
| 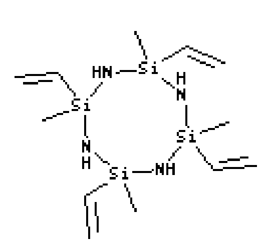 | |
| 1,3,5-trivinyl-1,3,5-trimethyl-cyclotrisilazane: | |
| 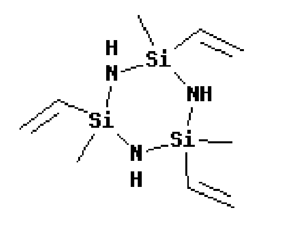 | |
| 1,3-divinyl-1,3-diphenyl-1,3-dimethyl-disilazane: | |
| 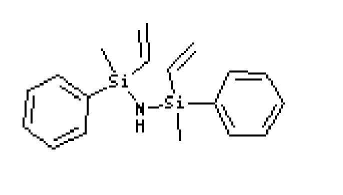 | |
| tetravinyl silane: | |
| 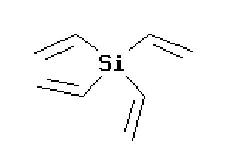 | |

It has also been found that the inclusions can be facilitated by increasing the concentration of Si-H reactive groups in the mixture of the base precursor and carbon-rich substance. This is achieved by adding at least one polycarbosilane sequence, for example. In the case where the carbon-rich substance contains triphenyl vinyl silane (VTPS) said polycarbosilane is preferably of the type SMP-1 0 from Starfire® Systems.

Following said inclusions of 2 to 20% of at least one carbon-rich substance, i.e. after chemical improvement of the base precursor, the improved precursor can be used for the production of a micromechanical component.

In a first stage, the process consists of producing the improved precursor as explained above at the same time, before or after, on the one hand, and a mould intended to receive the improved precursor, on the other. Since the precision of the mould is very important, it must be produced with care. In order to promote reticulation a cross-linking initiator in amount of 0.1 to 5 wt.%, preferably 0.3 to 1 wt.% is dispersed in the precursors. The initiator is exemplified but not restricted to the 1,1' - azobis(cyclohexanecarbonitrile) or dicumyl peroxide. In order to avoid bloating and other defects the degassing of the precursor under vacuum directly before further processing is highly recommended.

It is thus possible, amongst other things, to form a resin mould by photolithography, a silicon, quartz or corundum mould by dry or wet engraving, or also a mould made of a polymer such as dimethylpolysiloxane (PDMS) by duplicate moulding of a photostructured resin imprint.

In a second stage, the mould with the shape corresponding to the future micromechanical component is filled using the improved ceramic polymer precursor. Filling is conducted by any process such as e.g. injection, casting, sputtering or even pressing. The mould is preferably agitated and/or compressed in order to restrict the trapping of gas in the improved precursor.

In a third stage, the process continues with an at least partial reticulation of the improved precursor in order to form a green compact to allow it to be de-moulded in a fourth stage. The reticulation is achieve by prolonged (2-96h), preferably 8-36h action of heat, at temperature 70-220°C, preferably 140-190°C. Additionally, action of UV-light might be applied before thermal reticulation.

Finally in a last step, a pyrolysis of the green compact is conducted so that the at least partially reticulated improved precursor breaks down to ceramic to obtain the reinforced ceramic micromechanical component. The pyrolysis is preferably conducted in a controlled atmosphere such as e.g. an inert (nitrogen, argon, etc.) or vacuum atmosphere, in the temperature range of 1000°to 1450°C. The heating rate is in the range of 0.5 to 100 K.h ¹, preferably from 10 to 60 K.h⁻¹. The dwell time at the maximal temperature is 0 to 96h and, preferably, from 2 to 12h.

### Example 1

6 g of Ceraset® Polysilazane 20 (Clariant Charlotte, NC, USA), 3g of allylhydridopolycarbosliane SMP-10 (Starfire® Systems, Malta, NY, USA), 1g of Triphenylvinylsilane (ABCR GmbH, Karlsruhe, Germany) and 1g of 1,1' -azobis(cyclohexanecarbonitrile) (Sigma-Aldrich) were mixed in the 25-ml vial using for the sake of homogeneity ultrasonic horn during 30-60 second (liquid is heated up to 60°C).

The resulting mixture is evacuated at 0.3-0.6 mbar for 20-30 minutes whilst intensively stirred (800-1100 rpm), and thereafter casted PTFE moulds. The filled moulds are transferred to a hermetically tight chamber. The chamber is heated to the target temperature of 165-175°C and kept overnight.

After cooling the cured solidified samples are released mechanically from the moulds, placed into SiC boots and pyrolyzed under flowing Nitrogen up to the 1350°C with heating rate of 10 K.h⁻¹ and dwell time of 6h. After cooling (with rate of 300 K.h⁻¹) the pieces revealed average flexural strength of 0.6 GPa, maximal surface roughness Ra of 20 nm and coefficient of friction 0.03-0.08 against itself and 0.15-0.2 against alumina.

It is understood that the present invention is not restricted to the illustrated example, but is capable of various variants and modifications that will be evident to a person skilled in the art. In particular, other base precursors and/or other carbon-rich substances and/or other additions are conceivable.

Moreover, other applications than a moving part in or outside the field of watchmaking are also conceivable because of the improved mechanical qualities of the ceramic obtained as a result of the invention.

Finally, other processes for the production of the reinforced ceramic that do not necessarily use a mould are also conceivable.

## Claims

1. Ceramic polymer precursor containing 2-20 wt.% inclusions of at least one carbon-rich chemical substance in order to produce a reinforced ceramic.

2. Precursor according to the preceding claim, **characterised in that** it contains 4-9 wt.% inclusions at least one carbon-rich chemical substance.

3. Precursor according to claim 1 or 2, **characterised in that** it contains at least one polysilazane sequence.

4. Precursor according to any of the preceding claims, **characterised in that** it contains at least one polycarbosilane sequence.

5. Precursors according to any of the preceding claims, **characterised in that** said at least one carbon-rich chemical substance contains =Si-H moiety.

6. Precursors according to any of the preceding claims, **characterised in that** said at least one carbon-rich chemical substance contains =Si-CH=CH₂ moiety.

7. Precursors according to any of the preceding claims, **characterised in that** said at least one carbon-rich chemical substance contains =Si-CH₂-CH=CH₂ moiety.

8. Precursors according to any of the preceding claims, **characterised in that** said at least one carbon-rich chemical substance contains =Si-Phenyl moiety.

9. Precursors according to any of the preceding claims, **characterised in that** said at least one carbon-rich chemical substance contains =Si-Aromatic moiety except =Si-phenyl aromatic moiety.

10. Precursors according to any of claims 1 to 4, **characterised in that** said at least one carbon-rich chemical substance contains triphenyl vinyl silane.

11. Precursors according to any of claims 1 to 4, **characterised in that** said at least one carbon-rich chemical substance contains triphenyl silane.

12. Precursors according to any of claims 1 to 4, **characterised in that** said at least one carbon-rich chemical substance contains phenyl silane

13. Precursors according to any of claims 1 to 4, **characterised in that** said at least one carbon-rich chemical substance contains diphenyl silane.

14. Precursors according to any of claims 1 to 4, **characterised in that** said at least one carbon-rich chemical substance contains allyl-triphenyl silane.

15. Precursors according to any of claims 1 to 4, **characterised in that** said at least one carbon-rich chemical substance contains diallyl-triphenyl silane.

16. Precursors according to any of claims 1 to 4, **characterised in that** said at least one carbon-rich chemical substance contains p-tolylsilane.

17. Precursors according to any of claims 1 to 4, **characterised in that** said at least one carbon-rich chemical substance contains 1,3,5,7-tetravinyl-1,3,5,7-tetramethyl-cyclotetrasilazane.

18. Precursors according to any of claims 1 to 4, **characterised in that** said at least one carbon-rich chemical substance contains 1,3,5-trivinyl-1,3,5-tetramethyl-cyclotrisilazane.

19. Precursors according to any of claims 1 to 4, **characterised in that** said at least one carbon-rich chemical substance contains 1,3-divinyl-1,3-diphenyl-1,3-dimethyl disilazane.

20. Precursors according to any of claims 1 to 4, **characterised in that** said at least one carbon-rich chemical substance contains tetravinyl silane.

21. Process for the production of a ceramic polymer precursor in accordance with any of the preceding claims, **characterised in that** it includes the following steps:
a) providing a ceramic polymer precursor;
b) forming inclusions of at least one carbon-rich chemical substance in order to chemically improve the precursor.

22. Process according to the preceding claim, **characterised in that** step b) is facilitated by adding polycarbosilane in amount 5-95% to increase the concentration of Si-H reactive groups necessary for said inclusion, increase silicon carbide content and improve mechanical properties of the green compact.

23. Process according to the preceding claim, **characterised in that** said amount of polycarbosilane is comprised between 30 and 70%.

24. Process for the production of a micromechanical component made of reinforced ceramic material, **characterised in that** it includes the following steps:
- producing an improved ceramic polymer precursor according to any of claims 21 to 23;
- filling a mould with the shape corresponding to the future micromechanical component using said improved ceramic polymer precursor;
- conducting, at least partially, a reticulation of said precursor in order to form a green compact;
- de-moulding the green compact;
- conducting a pyrolysis operation to obtain the reinforced ceramic micromechanical component.

25. Process according to the preceding claim, **characterised in that** the pyrolysis is conducted in an inert gas atmosphere.

26. Process according to claim 24 or 25, **characterised in that** the pyrolysis is conducted between 1100 °C and 1450 °C.
